# EUROPEAN PATENT APPLICATION

(11) **EP 3 971 871 A1**
(43) Date of publication of application: **23.03.2022**
(21) Application number: 20805703.4
(22) Date of filing: 11.02.2020
(51) Int. Cl.: G09B 19/06, G09B 3/00

(54) **STUDY MATERIAL FOR NATIVE SPEAKER PRONUNCIATION BY BEGINNERS IN ENGLISH, AND ENGLISH STUDY METHOD USING SAME**

(30) Priority: 14.05.2019 KR 20190056096
(71) Applicant: Kim, Jung Ja, Gangnam-gu Seoul 06233 (KR)
(72) Inventor: Kim, Jung Ja, Gangnam-gu Seoul 06233 (KR)
(74) Representative: Sander, Rolf
(86) International application number: PCT/KR2020/001917
(87) International publication number: WO 2020/230983

(57) **Abstract**

The present invention relates to study material for beginners in English, and an English study method using same. According to the English study material and method according to the present invention, even beginners can easily convert Korean proper nouns into English notation. In addition, the beginners can easily pronounce English words similarly to native speakers on the basis of study areas, in which rules for notating stresses on vowels within English words segmented according to segmentation rules are studied step by step, and Korean-English character tables which exist in each of the study areas and are designed according to the stress rules.

## Description

### [Technical Field]

The present invention relates to a study material for beginners in English, and an English study method using the same.

Specifically, the present invention relates to an English study material for beginners, and an English study method using the same to enable even beginners to easily convert Korean proper nouns into English notation, and enable the beginners to easily pronounce English words similarly to native speakers on the basis of study areas, in which rules for notating stresses on vowels within English words segmented according to segmentation rules are studied step by step, and Korean-English character tables which exist in each of the study areas and are designed according to the stress rules.

### [Background Art]

English is an essential language as the universal language in the era of globalization. The importance of English is growing based on a report that the level of English proficiency in a country determines the competitiveness of the country.

However, the level of English proficiency of Koreans is very low. Recent statistics reported that the TOEFL scores of Korean students are the lowest among OECD countries, and even students with high test scores in TOEFL, TOEIC or the like have significantly poor speaking and listening skills.

This is a result contradictory to the statistics that Korea spends about 15 trillion Korean won per year, which is the highest among OECD countries, on private English education.

Accordingly, the level of English proficiency in Korea is very low compared to the education investment. The main reasons for the low level are the linguistic heterogeneity between Korean and English, and the wrong English-teaching method that does not take the linguistic heterogeneity into consideration.

Especially, such a problem is more serious in pronunciation education. Most of the pronunciations in English are not the same as Korean pronunciations, and English has significant differences from the Korean language in the position of tongue, the articulation method, and the like. However, according to most of the methods of learning English pronunciation in Korea as disclosed in Korean Unexamined Patent No. 10-2009-0099314 or Korean Utility Model Registration No. 20-0202181, the pronunciation of English corresponds to the pronunciation of Korean, thereby sounding like Korean. Accordingly, a learner develops pronunciations different from the original pronunciations, and as a result, listening and speaking skills are lowered, thereby causing problems in communication in English.

Meanwhile, the environmental conditions for using English by English beginners over sixties are increasing day by day due to frequent overseas travel of the elderly. However, there is not a step-by-step English education scheme for English beginners over sixties, or an English learning material for converting words written in English into Korean pronunciation and then enabling the beginners to read the words with pronunciation close to native speakers.

Further, it is very important to learn and pronounce factors such as tone strength and stress as well as pronunciation symbols of English words. However, an English material, for learning to easily explain rules for the tone strength or stress and pronounce the words similarly to native speakers, does not exist.

Accordingly, there is a growing need for English learning materials for beginners, which includes a step-by-step English learning scheme for beginners, enables the beginners to pronounce English words at a level close to native speakers, and more easily explains factors such as stress and tone strength in English.

(Patent Document 1) Korean Unexamined Patent Publication No. 2009-0099314

### [Disclosure]

### [Technical Problem]

The present invention provides a study material for beginners in English, and an English study method using the same, which are designed with a step-by-step English learning course for beginners.

In addition, the present invention provides a study material for beginners in English, and an English study method using the same, which are based on segmentation rules that partition an English word into individual segmental areas, and designed with a step-by-step stress notation learning course for beginners.

In addition, the present invention provides a study material for beginners in English, and an English study method using the same to enable the beginners to learn rules for notating Korean pronunciation corresponding to English consonants, vowels, and combinations thereof in an English word so as to use pronunciation similarly to native speakers.

### [Technical Solution]

In order to solve the above technical problems, the present invention provides an English study material and an English study method using the same, the English study material including: an English word notation part composed of a plurality of spellings; and a Korean pronunciation notation part including a Korean pronunciation notation corresponding to an individual segmentation area of an English word within the English word notation part.

The English study material a proper noun English notation learning area including a Korean-Romanization pronunciation symbol keyboard part for converting Korean notations of proper nouns including names, addresses, region names, and country names into English notations; a segmentation rule learning area for learning segmentation rules of the English word by using at least one of a first slash for partitioning the English word into individual segmentation areas by segmenting first and second consonants other than a single pronunciation consonant among spellings of the English word in the English word notation part, and a second slash for partitioning the English word into individual segmentation areas by segmenting a rear of a vowel unit including at least one vowel among middle spellings of the English word; a first learning area for learning to mark a stress at the top of an English vowel of an English word serving as an English word in the English word notation part, including English vowel "e" and including the English vowel located in a segmentation area adjacent to a segmentation area in which the English vowel "e" is located, and write a long vowel Korean pronunciation notation corresponding to the English vowel having the marked stress in the Korean pronunciation notation part; a second learning area for learning to mark a stress at the top of a prior vowel among double vowels of an English word serving as an English word in the English word notation part and including the double vowels, and write a double vowel Korean pronunciation notation corresponding to the double vowel in the Korean pronunciation notation part; a third learning area for learning to mark a stress at the top of an English vowel in a segmentation area located in front of a segmentation area disposed therein with "tion", "sion" or "cian" in an English word serving as an English word in the English word notation part and including the "tion", "sion" or "cian", and write a long vowel Korean pronunciation notation or short vowel Korean pronunciation notation corresponding to the English vowel having the marked stress in the Korean pronunciation notation part; and a fourth learning area for learning to mark a stress at the top of an English vowel included in a segmentation area disposed therein with an English spelling group among individual segmentation areas of an English word serving as an English word in the English word notation part and including the English spelling group formed by individually combining "c", "g" or "s" with "e", "i" or "y", and write a long vowel Korean pronunciation notation or short vowel Korean pronunciation notation corresponding to the English vowel having the marked stress in the Korean pronunciation notation part.

In one example, the vowel unit segmented by the second slash of the segmentation rule learning area may include at least one selected from: a single vowel; a double vowel; a front vowel of the double vowel; a vowel group including the single vowel or the double vowel and any single pronunciation consonant selected from the group consisting of "th", "sh", "ch", and "ph" disposed in front of the single or double vowel; a first li-eul (2) pronunciation group including a single vowel and an English spelling "r" disposed at rear of the single vowel; and a second li-eul (2) pronunciation group including a single vowel and English spellings "re" disposed at rear of the single vowel.

In one example, the first to fourth learning areas may be configured for learning to notate a tone strength of "strong" or "weak" at the top of a segmentation area including an English vowel among the individual segmentation areas of the English word in the English word notation part.

In one example, the first to fourth learning areas may be configured for learning to write " 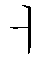 ", as a Korean pronunciation notation corresponding to the English vowel included in the segmentation area having the marked tone strength of "weak", in the Korean pronunciation notation part.

In one example, when the individual segmentation area of the English word is any one spelling of "p", "t", "k", "c", "b", "d", and "g", and a Korean pronunciation notation corresponding to the English spelling includes an English spelling which is a single Korean consonant pronunciation notation, the first to fourth learning areas may be configured for learning to combine the single Korean consonant pronunciation notation corresponding to the English spelling with a Korean pronunciation notation of a segmentation area prior to the segmentation area including the Korean pronunciation of the single Korean consonant pronunciation notation, so as to write the combined notations in the Korean pronunciation notation part.

In one example, the first to fourth learning areas may be configured for learning to combine, in an English word serving as an English word in the English word notation part and including any one Korean coda notation English consonant selected from the group consisting of "n", "m" and "l", a Korean pronunciation notation corresponding to the Korean coda notation English consonant with a Korean pronunciation notation of a segmentation area prior to a segmentation area disposed therein with Korean coda notation English consonant, so as to write the combined notations in the Korean pronunciation notation part.

In one example, the first learning area may be configured for learning to write a long vowel Korean pronunciation notation written in a long vowel sound Korean-English character table in the Korean pronunciation notation part, in which long vowel sound Korean-English character table includes a first-a area including English vowels "a", "e", "i", "o" and "u" as a long vowel Korean pronunciation notation corresponding to the English vowel having the marked stress; and a first-b area including " 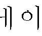 ", " 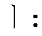 ", " 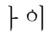 ", " 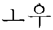 ", and " 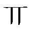 or 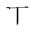 " as a long vowel Korean pronunciation notation corresponding to the English vowels, respectively.

In one example, the second learning area may be configured for learning to write a double vowel Korean pronunciation notation written in a double vowel Korean-English character table in the Korean pronunciation notation part, in which the double vowel Korean-English character table includes a second-a area including, as a double vowel Korean pronunciation notation corresponding to the double vowel, double vowels "ai", "ay", "ea", "ee", "ei", "ie", "oa", "ow", "ue" and "ui"; and a second-b area including double vowel Korean pronunciation notation " 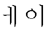 " corresponding to the double vowels "ai" and "ay", double vowel Korean pronunciation notation " 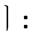 " corresponding to the double vowels "ea", "ee" and "ei", double vowel Korean pronunciation notation " 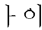 " corresponding to the double vowel "ie", double vowel Korean pronunciation notation " 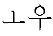 " corresponding to the double vowels "oa" and "ow", 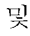 and double vowel Korean pronunciation notation " 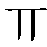 " corresponding to the double vowel "ue" and "ui".

In one example, the third first learning area may be configured for learning to write a long vowel Korean pronunciation notation written in a long vowel sound Korean-English character table in the Korean pronunciation notation part, in which the long vowel sound Korean-English character table includes a first-a area including English vowels "a", "e", "i", "o" and "u" as a long vowel Korean pronunciation notation corresponding to the English vowel having the marked stress; and a first-b area including " 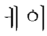 ", " 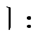 ", " 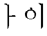 ", " 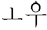 ", and " 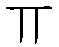 or 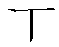 " as a long vowel Korean pronunciation notation corresponding to the English vowels, respectively, and may be configured for learning to write a short vowel Korean pronunciation notation written in a short vowel Korean-English character table in the Korean pronunciation notation part, in which the short vowel Korean-English character table includes a third-a area including English vowels "a", "e", "i", "o" and "u" as a short vowel Korean pronunciation notation corresponding to the English vowel having the marked stress; and a third-b area including " 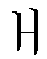 ", " 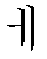 ", " 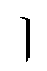 ", " 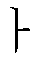 ", and " 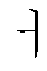 " as a short vowel Korean pronunciation notation corresponding to the English vowels, respectively.

In one example, the third first learning area may be configured for learning to write an English-Korean mixed pronunciation notation, which corresponds to "tion", "sion" or "cian" included in the English word in the English word notation part, in the Korean pronunciation notation part.

In one example, the fourth learning area may be configured for learning to write any one Korean pronunciation notation selected from the group consisting of " 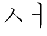 ", " 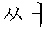 ", " 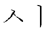 ", " 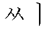 ", " 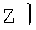 ", and " 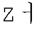 ", as a Korean pronunciation notation corresponding to an English spelling formed by individually combining "c", "g" or "s" with "e", "i" or "y", in the Korean pronunciation notation part.

In addition, the English study material may further include a fifth learning area for learning to mark a stress at the top of an English vowel included in a segmentation area in which a prefix or suffix is not located among individual segmentation areas of an English word serving as an English word in the English word notation part and including the prefix or suffix, and write a long vowel Korean pronunciation notation or short vowel Korean pronunciation notation corresponding to the English vowel having the marked stress in the Korean pronunciation notation part.

In addition, the present invention relates to an English study method using the English study material.

The English study method includes: learning to convert the Korean notations of the proper nouns into the English notations, in a proper noun English notation learning area including a Korean-Romanization pronunciation symbol keyboard part for converting the Korean notations of proper nouns including names, addresses, region names, and country names into the English notations; segmenting a first consonant and a second consonant other than a single pronunciation consonant among spellings of an English word in an English word notation part by using a first slash, segmenting a rear of a vowel unit including at least one vowel among middle spellings of the English word by using a second slash, or partitioning the English word into individual segmentation areas by using the first slash and the second slash; a first learning step of learning to mark a stress at the top of an English vowel of an English word as an English word partitioned into individual segmentation areas, including English vowel "e" and including the English vowel located in a segmentation area adjacent to a segmentation area in which the English vowel "e" is located, and write a long vowel Korean pronunciation notation corresponding to the English vowel having the marked stress in the Korean pronunciation notation part; a second learning step of learning to mark a stress at the top of a prior vowel among double vowels of an English word as an English word partitioned into individual segmentation areas and including the double vowels, and write a double vowel Korean pronunciation notation corresponding to the double vowel in the Korean pronunciation notation part; a third learning step of learning to mark a stress at the top of an English vowel in a segmentation area located in front of a segmentation area disposed therein with "tion", "sion" or "cian" in an English word as an English word partitioned into individual segmentation areas and including the "tion", "sion" or "cian", and write a long vowel Korean pronunciation notation or short vowel Korean pronunciation notation corresponding to the English vowel having the marked stress in the Korean pronunciation notation part; and a fourth learning step of learning to mark a stress at the top of an English vowel included in a segmentation area disposed therein with an English spelling group among individual segmentation areas of an English word as an English word partitioned into individual segmentation areas and including the English spelling group formed by individually combining "c", "g" or "s" with "e", "i" or "y", and write a long vowel Korean pronunciation notation or short vowel Korean pronunciation notation corresponding to the English vowel having the marked stress in the Korean pronunciation notation part.

In one example, the first to fourth learning steps may individually include: notating a tone strength of "strong" or "weak" at the top of a segmentation area including an English vowel among the individual segmentation areas of the English word in the English word notation part.

In one example, the first to fourth learning steps may individually include: writing " 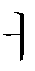 ", as a Korean pronunciation notation corresponding to the English vowel included in the segmentation area having the marked tone strength of "weak", in the Korean pronunciation notation part.

In addition, the English study method may further include: a fifth learning step of learning to mark a stress at the top of an English vowel included in a segmentation area in which a prefix or suffix is not located among individual segmentation areas of an English word as an English word partitioned into individual segmentation areas and including the prefix or suffix, and write a long vowel Korean pronunciation notation or short vowel Korean pronunciation notation corresponding to the English vowel having the marked stress in the Korean pronunciation notation part.

### [Advantageous Effects]

According to the English study material and the English study method according to the present invention, an English learning method is described sequentially from a method of writing proper nouns in English to a method of writing Korean pronunciations of English words, so that even beginners can easily learn English.

According to the English study material and the English study method according to the present invention, education on segmentation rules, stress notation rules, and pitch strength setting rules of English words is performed in a manner suitable for beginners, so that even beginners can employ English pronunciation similarly to native speakers.

In addition, according to the present invention, the beginners can learn rules for notating Korean pronunciation corresponding to English consonants, vowels, and combinations thereof in an English word, so as to use pronunciation similarly to native speakers.

The scope of the present invention is not limited by the above advantageous effects.

### [Description of Drawings]

FIGS. 1 and 2 show examples of a Korean-Romanization pronunciation symbol keyboard part included in a proper noun English notation learning area of the English study material according to the present invention.
FIGS. 3 and 15 are example diagrams showing long vowel sound Korean-English character tables according to the present invention.
FIGS. 4 and 17 are example diagrams showing consonant sound Korean-English character tables according to the present invention.
FIGS. 5 and 6 are diagrams for explaining the stress, tone strength, and Korean pronunciation notation of an English word written in an English word notation part of a first learning area according to the present invention.
FIG. 7 is an example diagram showing a double vowel sound Korean-English character table according to the present invention.
FIGS. 8 and 9 are diagrams for explaining the stress, tone strength, and Korean pronunciation notation of an English word written in an English word notation part of a second learning area according to the present invention.
FIGS. 10 and 11 are diagrams for explaining the stress, tone strength, and Korean pronunciation notation of an English word written in an English word notation part of a third learning area according to the present invention.
FIGS. 12 and 16 are example diagrams showing short long vowel sound Korean-English character tables according to the present invention.
FIGS. 13 and 14 are diagrams for explaining the stress, tone strength, and Korean pronunciation notation of an English word written in an English word notation part of a fourth learning area according to the present invention.

### [Best Mode]

### [Mode for Invention]

Hereinafter, the present invention will be described in more detail with reference to drawings and examples.

In the specification herein, a singular expression includes a plural expression unless otherwise specified.

For the terms used herein, general terms recently widely used has been selected as possible in consideration of the function according to the present invention, however, the term may vary depending on the intention of those skilled in the art, judicial cases, the advent of new technology, or the like. Further, the term may be arbitrarily selected by the applicant in certain cases, and the meaning thereof will be described in detail in the relevant description of the invention. Therefore, the term used in the present invention should be defined based on the meaning of the term and contents throughout the present invention, not simply on the name of the term.

The present invention may be applied with various modifications and have various embodiments, and specific embodiments will be illustrated in the drawings and described in the detailed description in detail. However, it is not intended to limit the scope of the specific embodiment, and it will be understood that the invention is intended to cover all modifications, equivalents and alternatives falling within the scope of spirit and technology of the invention. In the description of the embodiments, a detailed description of relevant known technology incorporated herein will be omitted when it possibly makes the subject matter of the present disclosure unclear.

In this specification, the terms such as first and second may be used to describe various elements, however, the elements will not be limited by the above terms. The terms are used only for the purpose of distinguishing one element from another element.

In the specification herein, it will be understood that the terms such as "include" and "constitute" are intended to designate the presence of feature, number, step, operation, element, component, or a combination thereof recited in the specification, which does not preclude the possibility of the presence or addition of one or more other features, numbers, steps, operations, elements, components, or combinations thereof.

In the specification herein, the term "single vowel" refers to a vowel when any one vowel selected from the group consisting of a, e, i, o, and u is located among middle spellings in an English word, and r or any one coda spelling selected from the group consisting of the vowel, n, m, and 1 is not located at a front or rear of the vowel.

For example, the single vowel may denote the English vowel "a" in the following English word 1.

### [English word 1]

### take

In another example, the single vowel may denote the English vowel "e" in the following English words 2 to 4.

### [English word 2]

### test

### [English word 3]

### chest

### [English word 4]

### chef

In the specification herein, when any one vowel selected from the group consisting of a, e, i, o, and u is located among middle spellings in an English word, and the same or different vowel or spelling "y" or "w" is located before or after the vowel, the term "double vowel" refers to the corresponding vowel group or an English spelling group including the corresponding vowel and "y" or "w".

For example, the double vowel may denote the English vowel spelling group "ow" in the following English word 5.

### [English word 5]

### grow

In another example, the double vowel may denote the English vowel spelling group "oa" in the following English word 6.

### [English word 6]

### road

In another example, the double vowel may denote the English spelling group "ay" in the following English word 7.

### [English word 7]

### Stay

In general, only the preceding spelling of the double vowel induces pronunciation. As described above, the double vowel that has pronunciation induced only by a preceding spelling or has a stress on the preceding spelling, may be referred to as a "front vowel stress-including double vowel".

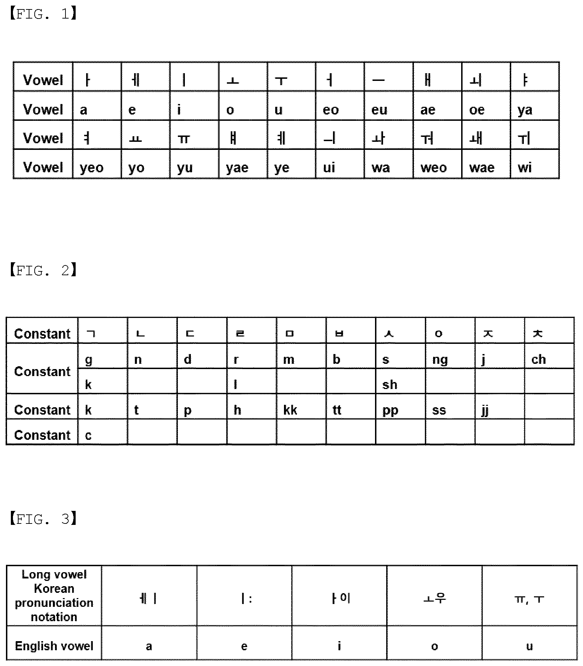

The front vowel stress-including double vowel may include "ai", "ay", "ea", "ee", "ei", "ie", "oa", "ow", "ue" and "ui" as an example, as specifically arranged to correspond to the double vowel Korean pronunciation notation in FIG. 2.

In the case of the front vowel stress-including double vowel, an English word may be segmented at rear of the double vowel.

Meanwhile, the double vowel other than the front vowel stress-including double vowel may have a rule of being segmented at a front vowel of the double vowel. For example, the double vowel other than the front vowel stress-including double vowel may denote "oi" in the following English word 8.

### [English word 8]

### coin

In other words, the double vowel "oi" in the English word 8 is the double vowel other than the front vowel stress-including double vowel, and may be segmented at rear of "o" serving as a front vowel of a double vowel, so that a Korean pronunciation notation corresponding to each segmentation area may be written.

In another example, the double vowel other than the front vowel stress-including double vowel may denote "ou" in the following English word 9.

### [English word 9]

### found

The above English word "found" may be segmented at rear of the front vowel "o" from "ou" serving as a double vowel other than the front vowel stress-including double vowel, so that a Korean pronunciation notation corresponding to each segmentation area may be written, in which the English spellings "fo" become a vowel group including "o" serving as the front vowel of the double vowel "ou".

The double vowel other than the front vowel stress-including double vowel may further include "oy" as an example in addition to the above "ou" and "oi".

As described above, the single vowel, the double vowel, a vowel coda group including any one coda spelling selected from the group consisting of "n", "m" and "l" disposed at rear of the double vowel, and the front and rear vowels between the double vowel are segmented by using the second slash, so that the Korean pronunciations corresponding to the segments of the English word can be clear.

Meanwhile, "io" and "ia" of "tion", "sion" and "cian" may be excluded from the above double vowel. As described hereinafter, the "tion", "sion" and "cian" may be written in the Korean pronunciation notation part through one English-Korean mixed pronunciation notation.

In the specification herein, the term "single consonant" refers to a consonant consisting of a single spelling excluding vowels among middle spellings of an English word, and refers to the corresponding consonant when a consonant (double consonant) and a single pronunciation consonant, which are the same as the above consonant, are not located in front or rear of the consonant consisting of the single spelling.

In one example, the single consonant may denote a single English consonant spelling "c" in the following English word 10.

### [English word 10]

### politics

In other words, the vowel "i" is located in front of the single consonant spelling "c" of the English word 10, and the consonant "s" different from "c" is located at rear thereof, and accordingly, the above "c" satisfies the requirement for the single consonant.

In the specification herein, the term "single pronounce consonant" refers to a consonant that may consists of at least two consonants, and be notated with a single pronunciation when a pronunciation of a corresponding consonant group is notated in English or Korean.

In one example, the single pronounce consonant may be any one selected from the group consisting of "th", "sh", "ch", and "ph".

Herein, "th", "sh", "ch" and "ph" may be written in the Korean pronunciation notation part by using a single pronunciation notation such as θ, 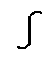 , k (or " 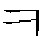 " as a Korean notation ), and f, respectively, thereby belonging to the single pronunciation consonant. Each of those belonging to the single pronunciation consonant may be treated as one consonant, and segmented with other consonants or vowels so as to be written in the Korean pronunciation notation part.

In one example, the single pronounce consonant may denote "th" in the following English word 11.

### [English word 11]

### three

In other words, the single pronunciation consonant "th" of the English word 11 consists of two English spellings and has a single pronunciation as θ, thereby satisfying the requirement for the single pronunciation consonant.

In the specification herein, the term "Korean coda notation English consonant" refers to "n", "m" or "l" included in an English word, and denotes the corresponding "n", "m" or "1" when the Korean pronunciation notation corresponding to the "n", "m" or "1" is combined and written, in the form of a Korean consonant, with a Korean pronunciation notation in a segmentation area before a segmentation area in which the "n", "m" or "l" is located.

In one example, the Korean coda notation English consonant may denote the English consonant "l" in the following English word 12.

### [English word 12]

### Revolution

In other words, the English word 12 is segmented into individual segmentation areas such as "Re/vo/lu/tion" by the first and second slashes, wherein the Korean pronunciation notation " 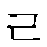 " corresponding to the English consonant "l" is combined with the Korean pronunciation notation " 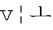 " corresponding to "/vo/" serving as a segmentation area preceding a segmentation area in which the "1" is located, thereby making the Korean pronunciation of the preceding segmentation area become " 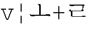 ", so as to belong to the Korean coda notation English consonant.

In the specification herein, the term "first li-eul (2) pronunciation group" refers to a spelling group including a single vowel and an English spelling "r" disposed at rear of the single vowel, and denotes a spelling group segmented by the first slash or second slash.

In one example, the first li-eul (2) pronunciation group may denote "mar" in the following English word 13.

### [English word 13]

### smart

In other words, "mar" of the English word 13 includes the English spelling "r" at rear of the single vowel "a", and is segmented from "s" and "t" by the first slash and the second slash, respectively, thereby satisfying the requirement of the li-eul (2) pronunciation group.

In the specification herein, the term "second li-eul (2) pronunciation group" refers to a spelling group including a single vowel and an English spelling "re" disposed at rear of the single vowel, and denotes a spelling group segmented by the first slash or second slash.

In one example, the second li-eul (2) pronunciation group may denote "care" in the following English word 14.

### [English word 14]

### careful

In the specification herein, the term "English-Korean mixed pronunciation notation" refers to a pronunciation notation formed by combining an English pronunciation symbol corresponding to a consonant that is difficult to notate in Korean or a group of consonants that are difficult to notate in Korean with a Korean consonant and/or vowel, and includes, as an example: 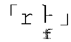 , 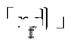 , 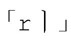 , 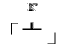 , 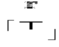 , 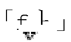 , 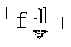 , 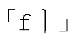 , 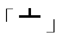 , 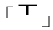 , 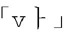 , 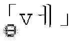 , 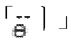 , 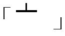 , 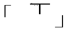 ; 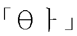 , 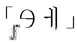 , 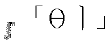 , 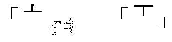 , 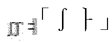 , 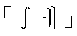 , 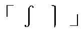 , 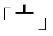 , 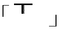 , 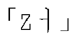 , 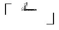 , or 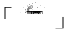 . The "consonant that is difficult to notate in Korean" or the "group of consonants that are difficult to notate in Korean" refer to consonants that are difficult to express with Korean pronunciation symbols and an English spelling group including the same.

In the specification herein, the term "single Korean consonant pronunciation notation" refers to a consonant Korean pronunciation notation such as " 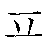 ", " 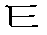 ", " 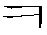 ", " 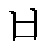 ", " 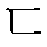 " and " 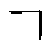 " corresponding to any one English spelling among "p", "t", "k", "c", "b", "d" and "g", respectively, which are notated in the Korean pronunciation notation part, alone or together with the Korean pronunciation notation such as "-", in the Korean pronunciation notation part corresponding to a segmentation area in which the English spelling is located, and denotes an English spelling that may be notated as a coda in the Korean pronunciation notation located in the preceding segmentation area.

Hereinafter, the English study material according to the present invention will be described.

The English study material according to the present invention includes: an English word notation part composed of a plurality of spellings; and a Korean pronunciation notation part including a Korean pronunciation notation corresponding to an individual segmentation area of an English word within the English word notation part. The English word notation part and the Korean pronunciation notation part exist in each English word existing in each learning area described later.

The English learning material according to the present invention includes a proper noun English learning area.

English learners may learn to convert proper nouns including names, addresses, region names, and country names into English notations through the proper noun English learning area.

The proper noun English learning area includes a Korean-Romanization pronunciation symbol keyboard part for converting Korean notations of proper nouns including names, addresses, region names, and country names into English notations.

In addition, the Korean-Romanization pronunciation symbol keyboard part of the proper noun English learning area includes: a Korean vowel-Romanization keyboard part including a Korean vowel group and a first Roman alphabet group in which Roman letters corresponding to Korean vowels of the Korean vowel group are notated; and a Korean consonant-Romanization keyboard part including a Korean consonant group and a second Roman alphabet group in which Roman letters corresponding to Korean consonants of the Korean consonant group are notated.

The proper noun English learning area refers to an area for learning to notate proper nouns including names, addresses, region names and country names into English, and includes a Korean-Romanization pronunciation symbol keyboard part in which Roman alphabets corresponding to the Korean vowels or consonants are written.

In one example, as shown in FIGS. 1 and 2, the Korean-Romanization pronunciation symbol keyboard part may include: a Korean vowel-Romanization keyboard part (FIG. 1) including a Korean vowel group including " 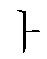 ", " 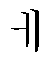 ", " 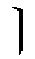 ", " 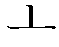 ", " 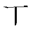 ", " 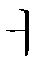 ", " 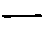 ", " 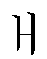 ", " 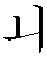 ", " 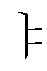 ", " 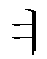 ", " 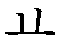 ", " 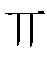 ", " 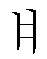 ", " 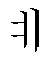 ", " 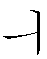 ", " 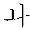 ", " 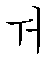 ", " 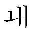 ", " 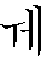 " and " 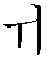 ", and a first Roman alphabet group including "a", "e", "i", "o", "u", "eo", "eu", "ae", "oe", "ya", "yeo", "yo", "yu" ', "yae", "ye", "ui", "wa", "weo", "wae", "we" and "wi" sequentially corresponding to individual Korean vowels of the Korean vowel group; and a Korean consonant-Romanization keyboard part (FIG. 2) including a Korean consonant group including " 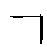 " to " 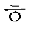 ", " 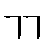 ", " 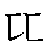 ", " 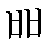 ", " 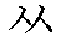 ", and " 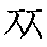 ", and a second Roman alphabet group including "g" and "k", "n", "d", "r" and "l", "m", "b", "s" and "sh", "ng", "j", "ch" ", "k" and "c", "t", "p", "h", "kk", "tt", "pp", "ss" and "jj" sequentially corresponding to individual Korean consonants of the Korean consonant group.

English learners may learn to convert proper nouns written in Korean into English through the Korean-Romanization pronunciation symbol keyboard part illustrated in FIGS. 1 and 2.

In one example, the English learners may convert a proper noun of a region name " 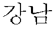 " into "Gangnam" in English by using English notations "g", "n", "ng", "m," corresponding to consonants " 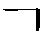 ", " 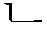 ", " 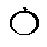 " and " 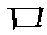 ", and English notation "a" corresponding to vowel " 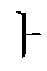 " in the Korean-Romanization pronunciation symbol keyboard part.

English learners may easily convert Korean notations of proper nouns including names, addresses, region names, and country names into English notations through the proper noun English learning area. The English study material according to the present invention can prevent the possibility of difficulties in learning due to confusion with the Korean pronunciation notation rules of an English word located at rear thereof.

The English study material according to the present invention includes a segmentation rule learning area.

The segmentation rule learning area is configured for learning rules of segmenting an English word in the English word notation part into individual areas according to a predetermined rule.

Specifically, in the segmentation rule learning area, the segmentation rules of the English word is learned by using at least one of a first slash for partitioning the English word into individual segmentation areas by segmenting first and second consonants other than a single pronunciation consonant among spellings of the English word in the English word notation part; and a second slash for partitioning the English word into individual segmentation areas by segmenting a rear of a vowel unit including at least one vowel among middle spellings of the English word.

The segmentation rule learning area is configured for learning to segment between the first consonant and the second consonant of the English word by using the first slash so as to partition the English word into individual segmentation areas.

Specifically, the segmentation rule learning area may be configured for learning to segment between "com" and "p" and between "p" and "le" of English word "complete" by using the first slash. In the above case, the segmentation rule learning area may be configured for learning to segment a rear of vowel unit ^{┌}le_{┘} by using the second slash, and may be configured for ultimately learning to segment English word "complete" into "com/p/le/te".

In another example, the segmentation rule learning area may be configured for learning to segment between "g" and "ree" of English word "agree" by using the first slash. In the above case, the segmentation rule learning area may be configured for learning to segment the English word "agree" into "a/g/ree" as a whole by segmenting a rear of the vowel unit "a" using the second slash.

The segmentation rule learning area is configured for learning to partition an English word into individual segmentation areas by segmenting a rear of a vowel unit of the English word using the second slash.

In one example, the vowel unit may include at least one selected from: a single vowel; a double vowel; a front vowel of the double vowel; a vowel group including the single vowel or the double vowel and any single pronunciation consonant selected from the group consisting of "th", "sh", "ch", and "ph" disposed in front of the single or double vowel; a first li-eul (2) pronunciation group including a single vowel and an English spelling "r" disposed at rear of the single vowel; and a second li-eul (2) pronunciation group including a single vowel and English spellings "re" disposed at rear of the single vowel.

Specifically, the second slash may segment a single vowel; a double vowel; a vowel group including a single pronunciation consonant; a first li-eul (2) pronunciation group; and a second li-eul (2) pronunciation group, and the English spelling or English spelling group segmented by the second slash may vary depending on a type of an English word written in the English word notation part.

In one example, the segmentation rule learning area may be configured for learning to segment a rear of vowel group "roa" including double vowel "oa" in English word "road", and may be configured for ultimately learning to segment the English word "road" into "roa/d".

In another example, the segmentation rule learning area may be configured for learning to segment a rear of first li-eul ( 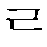 ) pronunciation group "sur" in English word "survey", and may be configured for ultimately learning to segment the English word "survey" into "sur/vey".

Accordingly, after the English word in the English word notation part is partitioned into individual segmentation area by the first and second slashes, the learning step, of performing stress notation, tone strength notation, and Korean pronunciation notation corresponding to the individual segmentation area in each learning area described later, is performed, so that even beginners can speak English words with a pronunciation close to native speakers without much difficulty.

The English study material according to the present invention includes first to fourth learning areas.

the first to fourth learning areas are configured for learning to mark a stress on a top of a vowel located in any one of individual segmentation area of an English word segmented according to a predetermined segmentation rule.

In addition, the first to fourth learning areas are configured for learning to write Korean pronunciation notation written in a long vowel or short vowel sound Korean-English character table corresponding to the vowel having the marked stress, or write Korean pronunciation notation written in a double vowel sound Korean-English character table corresponding to the double vowel including the vowel having the marked stress in the Korean pronunciation notation part.

In addition, the first to fourth learning areas may be configured for learning to write Korean pronunciation notations written in the consonant sound Korean-English character table and corresponding to English consonants in each segmentation area of an English word segmented according to a predetermined segmentation rule, and write Korean pronunciation notations corresponding to English vowels in each individual segmentation area and written in a long vowel or short vowel sound Korean-English character table.

In addition, the first to fourth learning areas may be configured for learning to combine Korean notation difficult consonants in each segmentation area of an English word segmented according to a predetermined segmentation rule with Korean pronunciation notations corresponding to consonants or vowels located before or after the consonants, thereby writing the combined consonants in the Korean pronunciation notation part.

In addition, the first to fourth learning areas may be configured for learning to mark the tone strength of "strong" in the segmentation area where the stress is marked among the individual segmentation areas of the English word in the English word notation part, and mark the tone strength of "weak" in the segmentation area located before or after the segmentation area having the marked tone strength of "strong" and including the English vowel or English spelling "y".

In addition, the first to fourth learning areas may be configured for learning to mark the tone strength only at the top of a segmentation area including an English vowel among the individual segmentation areas of the English word in the English word notation part.

Specifically, the first to fourth learning areas may be configured for learning to notate a tone strength of "strong" or "weak" at the top of a segmentation area including an English vowel among the individual segmentation areas of the English word in the English word notation part.

More specifically, the first to fourth learning areas may be configured for learning to mark the tone strength of "strong-weak-strong-weak", "weak-strong-weak-strong", "weak-strong-weak-weak", "weak-weak-strong-weak", "weak-weak-weak-strong", "strong-weak-weak", "weak-strong-weak", "weak-weak-strong", "weak-strong" or "strong-weak" at the top of each of individual segmentation areas or at least two segmentation areas of the English word in the English word notation part.

In addition, the first to fourth learning areas may be configured for learning to write " 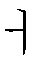 ", as a Korean pronunciation notation corresponding to the English vowel included in the segmentation area having the marked tone strength of "weak", in the Korean pronunciation notation part. Specifically, the first to fourth learning areas may be configured for learning to write " 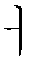 " in the Korean pronunciation notation part, as a Korean pronunciation notation corresponding to the English vowel included in the segmentation area other than the segmentation area located in an end of the English word among the segmentation areas having the marked tone strength of "weak".

In addition, the first to fourth learning areas may be configured for learning to mark the tone strength of "strong" at the top of the area including the English spellings "ar" when any one area includes the English spellings "ar" among the individual segmental areas of the English word in the English word notation part, and mark the tone strength of "weak" at the top of the area including the English spellings "er", "ir", "or" or "ur" when any one area includes the English spellings "er", "ir", "or" or "ur" among the individual segmental areas of the English word in the English word notation part.

In addition, the first to fourth learning areas may be configured for learning to write the Korean pronunciation notation " 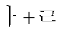 " corresponding to the "ar" in the Korean pronunciation notation part when the English word segmented according to the segmentation rule includes "ar", "er", "ir", "or" or "ur", and write the Korean pronunciation notation " 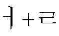 " corresponding to the "er", "ir", "or" or "ur" in the Korean pronunciation notation part.

In addition, when the individual segmentation area of the English word is any one spelling of "p", "t", "k", "c", "b", "d", and "g", and a Korean pronunciation notation corresponding to the English spelling includes an English spelling which is a single Korean consonant pronunciation notation, the first to fourth learning areas may be configured for learning to combine the single Korean consonant pronunciation notation corresponding to the English spelling with a Korean pronunciation notation of a segmentation area prior to the segmentation area including the Korean pronunciation of the single Korean consonant pronunciation notation, so as to write the combined notations in the Korean pronunciation notation part.

In addition, the first to fourth learning areas may be configured for learning to combine, in an English word serving as an English word in the English word notation part and including any one Korean coda notation English consonant selected from the group consisting of "n", "m" and "l", a Korean pronunciation notation corresponding to the Korean coda notation English consonant with a Korean pronunciation notation of a segmentation area prior to a segmentation area disposed therein with Korean coda notation English consonant, so as to write the combined notations in the Korean pronunciation notation part.

Hereinafter, the role, function, and configuration of each learning area will be described in more detail.

the first learning area is configured for learning to mark a stress at the top of an English vowel of an English word serving as an English word in the English word notation part, including English vowel "e" and including the English vowel located in a segmentation area adjacent to a segmentation area in which the English vowel "e" is located, and write a long vowel Korean pronunciation notation corresponding to the English vowel having the marked stress in the Korean pronunciation notation part.

the first learning area is configured for learning stress notation rules, Korean pronunciation notation rules, and tone strength notation rules for an English word additionally as an English word including the English vowel "e" at an end and including English vowels the same as or different from the English vowel "e".

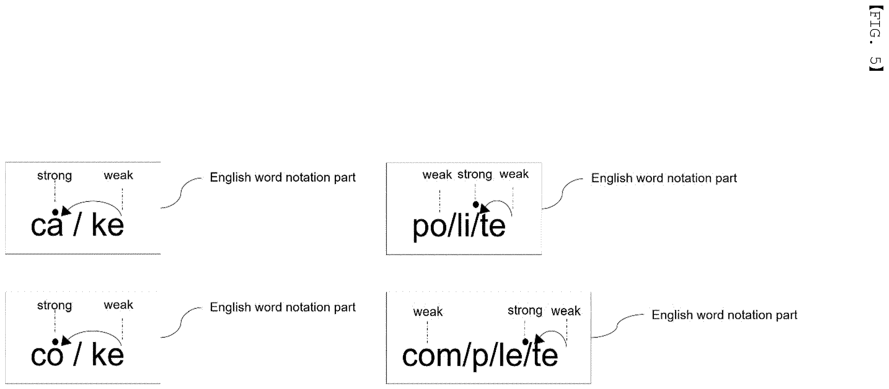

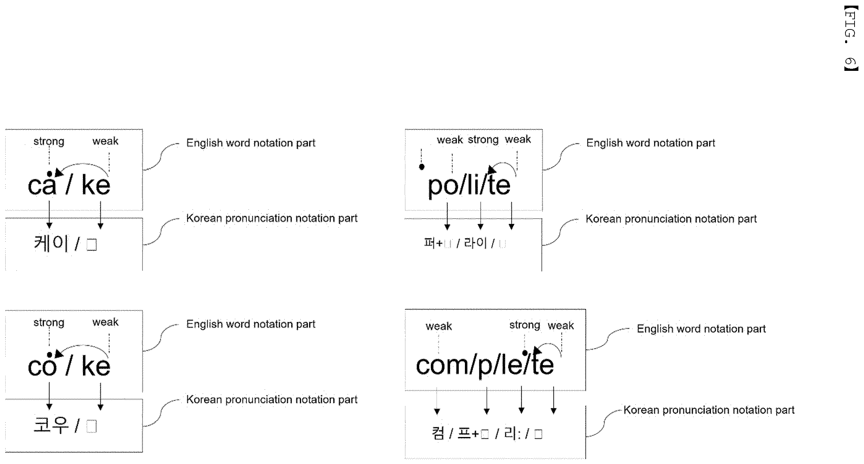

FIGS. 5 and 6 show English words for explaining the stress, tone strength, and Korean pronunciation notation of the English word written in the English word notation part of the first learning area according to the present invention.

In a specific example, as shown in FIG. 3, the first learning area is configured for learning the stress notation rules, the Korean pronunciation rules, and the tone strength notation rules of a word when including English vowel "e" at the end, such as "cake", "coke", "polite", and "complete", and including "e" or another vowel in a segmentation area before the segmentation area including "e".

More specifically, with respect to English words "ca/ke", "co/ke", "po/li/te" and "com/p/le/te" partitioned into individual segmentation areas by at least one of the first slash and the second slash as learned by the segmentation rule learning area, and including English vowel "e" at the end, the first learning area may be configured for learning to mark a stress at the top of vowels "a", "o", "i" and "e" located in the segmentation area before the area in which the English vowel "e" at the end is located.

Then, the first learning area is configured for learning to write a long vowel Korean pronunciation notation corresponding to the English vowel having the marked stress in the Korean pronunciation notation part.

Specifically, the first learning area may be configured for learning to write a long vowel Korean pronunciation notation written in a long vowel sound Korean-English character table in the Korean pronunciation notation part, in which the long vowel sound Korean-English character table includes a first-a area including English vowels "a", "e", "i", "o" and "u" as a long vowel Korean pronunciation notation corresponding to the English vowel having the marked stress; and a first-b area including " 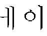 ", " 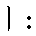 ", " 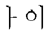 ", " 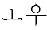 ", and " 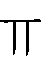 or 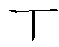 " as a long vowel Korean pronunciation notation corresponding to the English vowels, respectively.

For example, the long vowel sound Korean-English character table may have a structure, as shown in FIG. 3, in which English vowels and long vowel Korean pronunciation notations corresponding to the English vowels are written together to be located at upper and lower sections, respectively, but the present invention is not limited thereto.

Then, the first learning area may be configured for learning to write Korean pronunciation notations corresponding to English consonants in each individual segmentation area of an English word and written in a consonant sound Korean-English character table.

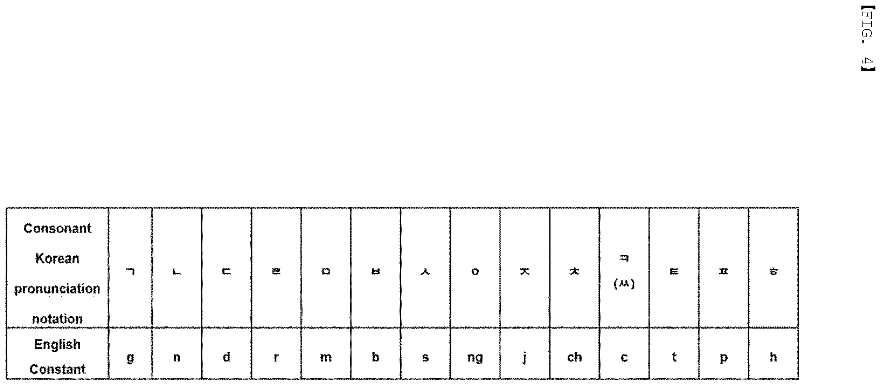

For example, the consonant sound Korean-English character table may have a structure, as shown in FIG. 4, in which English consonants and consonant Korean pronunciation notations corresponding to the English consonants are written together to be located at upper and lower sections, respectively, but the present invention is not limited thereto.

Meanwhile, before the Korean pronunciation notations written in the consonant sound Korean-English character table and corresponding to the consonants in the English word are written in the Korean pronunciation notation part, the first learning area may be configured for learning to mark the tone strength of "strong" in the segmentation area in which the stress is marked among the individual segmentation areas of the English word, and mark the tone strength of "weak" in the segmentation area located before or after the segmentation area having the marked tone strength of "strong" and including the English vowel.

Specifically, the first learning area may be configured for learning to notate a tone strength of "strong" or "weak" at the top of a segmentation area including an English vowel among the individual segmentation areas of the English word in the English word notation part.

In one example, the first learning area may be configured for learning to mark a stress at the top of "a", "o", "i" and "e" included in the English words "ca/ke", "co/ke", "po/li/te" and "com/p/le/te" and then mark the tone strength of "strong" at the top of the segmentation area having the marked stress, and mark the tone strength of "weak" at the top of the segmentation area including an English vowel among segmentation areas before and after the segmentation area having the marked tone strength of "strong", so that the English word notation part is organized in the same form as in FIG. 3 as a whole, but the present invention is not limited thereto.

In addition, the first learning area may be configured for learning to write the stress providing notation (see FIG. 5) from the English vowel "e" located at the end of the English word to the English vowel having the marked the stress, before marking the tone strength of "strong" in the segmentation area having the marked stress.

The first learning area is configured for learning to write each English consonant or vowel of an English word in the English word notation part having the marked tone strength in the Korean pronunciation notation part by using the corresponding Korean pronunciation notation written in the consonant sound Korean-English character table or long vowel sound Korean-English character table. Specifically, as shown in FIG. 6, the first learning area may be configured for learning to, with respect to "ca" in English word "ca/ke", write Korean pronunciation notation " 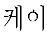 ", which is formed by combining " 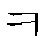 " corresponding to "c" and existing in the consonant sound Korean-English character table with " 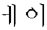 " corresponding to "a" and existing in the long vowel sound Korean-English character table, in the Korean pronunciation notation part, and write " 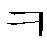 " or " 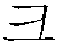 " with respect to "ke" in the Korean pronunciation notation part with reference to the consonant sound Korean-English character table.

Likewise, as shown in FIG. 6, the first learning area may be configured for learning to, with respect to "co" in English word "co/ke", write Korean pronunciation notation " 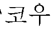 ", which is formed by combining " 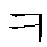 " corresponding to "c" and existing in the consonant sound Korean-English character table with " 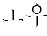 " corresponding to "o" and existing in the long vowel sound Korean-English character table, in the Korean pronunciation notation part, and may be configured for learning to write " 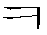 " or " 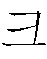 " with respect to "ke" in the Korean pronunciation notation part with reference to the consonant sound Korean-English character table.

Meanwhile, the Korean pronunciation notation " 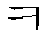 " corresponding to the 'k' is a single Korean consonant pronunciation notation, and may be written in the Korean pronunciation notation part in the form of " 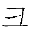 ", and may be written in the Korean pronunciation notation part in combination with the Korean pronunciation notation of the preceding segmentation area. The first learning area may be configured for learning to write the above Korean pronunciation notation.

In addition, the first learning area may be configured for learning to write " 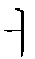 ", as a Korean pronunciation notation corresponding to the English vowel included in the segmentation area having the marked tone strength of "weak" among the segmentation areas of the English word in the English word notation part, in the Korean pronunciation notation part. Specifically, the first learning area may be configured for learning to write " 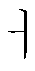 " in the Korean pronunciation notation part, as a Korean pronunciation notation corresponding to the English vowel included in the segmentation area other than the segmentation area located in an end of the English word among the segmentation areas having the marked tone strength of "weak".

Accordingly, as shown in FIG. 6, the first learning area may be configured for learning to notate English vowel "o" in English word "com/p/le/te" in the form of Korean pronunciation notation " 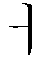 " in the Korean pronunciation notation part.

In addition, when the English word in the English word notation part contains any one Korean coda notation English consonant selected from the group consisting of "n", "m" and "1", the first learning area may be configured for learning to combine the corresponding English consonant with the Korean pronunciation notation of the preceding segmentation area and write the combination in the Korean pronunciation notation part.

Specifically, as shown in FIG. 6, the first learning area may be configured for learning to, with respect to English word "po/li/te", combine the consonant Korean pronunciation notation " 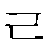 " corresponding to "1" included in "li" of a rear segmentation area of the "po" with the Korean pronunciation notation " 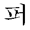 " of the "po" and write " 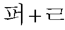 " or " 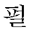 " as the Korean pronunciation notation corresponding to the "po" in the Korean pronunciation notation part.

Likewise, "l" included in "le" in the English word "com/p/le/te" is a Korean coda notation English consonant, so the first learning area may be configured for learning to combine the consonant Korean pronunciation notation " 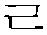 " corresponding to the "1" with Korean pronunciation notation " 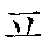 " of a segmentation area before the segmentation area in which the "l" is located, and write the combination in the form of " 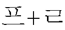 " or " 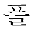 " in the Korean pronunciation notation part.

the second learning area is configured for learning to mark a stress at the top of a prior vowel among double vowels of an English word serving as an English word in the English word notation part and including the double vowels, and write a double vowel Korean pronunciation notation corresponding to the double vowel in the Korean pronunciation notation part.

In other words, the second learning area is configured for learning stress notation rules, Korean pronunciation notation rules, tone strength notation rules, and the like for an English word including double vowels.

the second learning area may be configured for learning to mark a stress at the top of a prior vowel among double vowels of an English word serving as an English word in the English word notation part and including the double vowels, and the double vowel serving as a basis for the above stress mark may include, for example, "ai", "ay", "ea", "ee", "ei", "ie", "oa", "ow", "ue" and "ui".

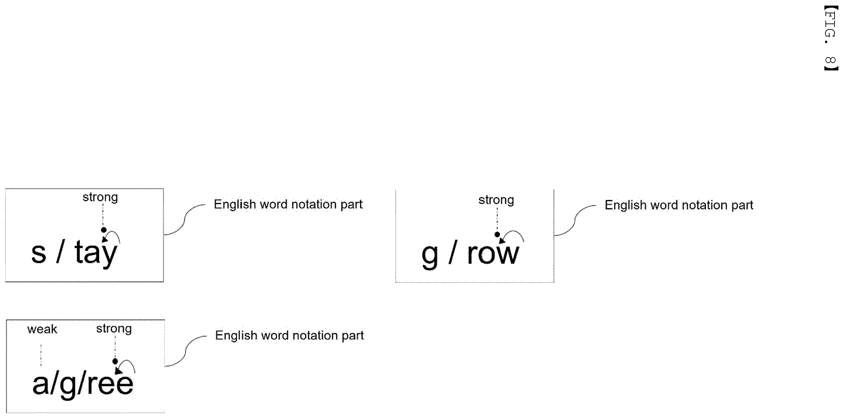

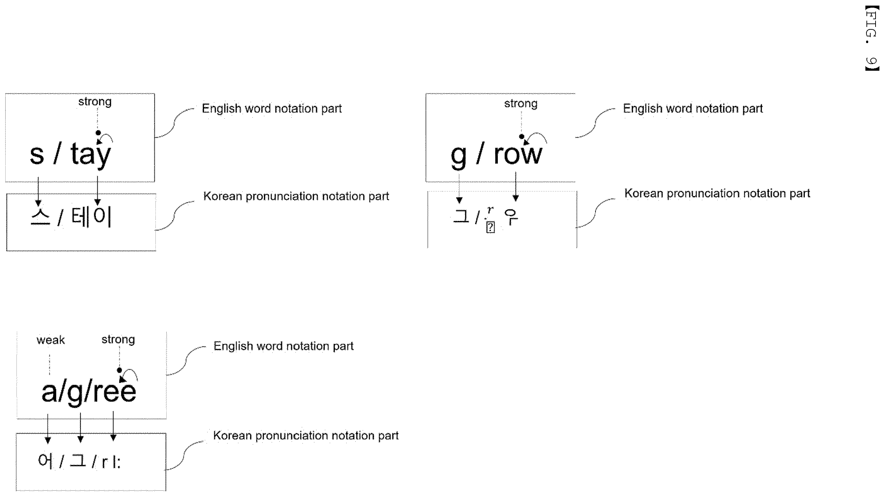

FIGS. 8 and 9 show English words for explaining the stress, tone strength, and Korean pronunciation notation of the English word written in the English word notation part of the second learning area according to the present invention.

In a specific example, the second learning area may be configured for learning to partition the word into individual segmentation areas by at least one of the first slash and the second slash as learned by the segmentation rule learning area, and mark a stress on "a", "o" and "e" that are preceding vowels of double vowels "ay", "ow" and "ee" in the English words, with respect to English words "s/tay", "g/row" and "a/g/ree" containing double vowels.

The second learning area is configured for learning to write a double vowel Korean pronunciation notation corresponding to the double vowel in the Korean pronunciation notation part after marking the stress.

Specifically, the second learning area may be configured for learning to write a double vowel Korean pronunciation notation written in a double vowel Korean-English character table in the Korean pronunciation notation part, in which the double vowel Korean-English character table includes: a second-a area including, as a double vowel Korean pronunciation notation corresponding to the double vowel, double vowels "ai", "ay", "ea", "ee", "ei", "ie", "oa", "ow", "ue" and "ui"; and a second-b area including double vowel Korean pronunciation notation " 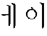 " corresponding to the double vowels "ai" and "ay", double vowel Korean pronunciation notation " 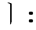 " corresponding to the double vowels "ea", "ee" and "ei", double vowel Korean pronunciation notation " 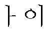 " corresponding to the double vowel "ie", double vowel Korean pronunciation notation " 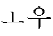 " corresponding to the double vowels "oa" and "ow", and double vowel Korean pronunciation notation " 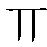 " corresponding to the double vowel "ue" and "ui".

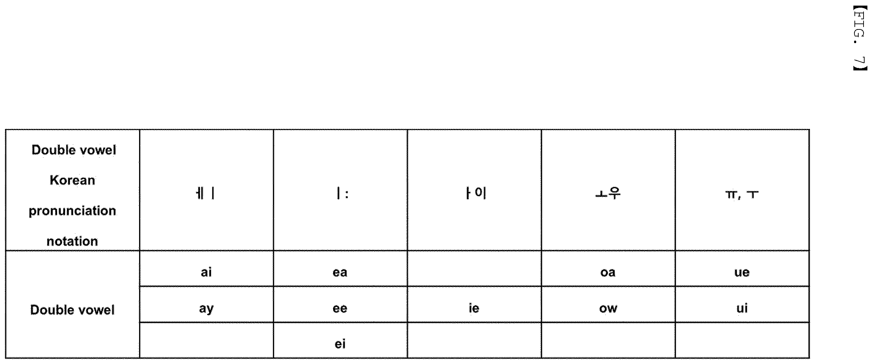

As shown in FIG. 7 for example, the double vowel sound Korean-English character table may have a structure in which English double vowels and double vowel Korean pronunciation notations corresponding to the double vowels are written together to be located at upper and lower sections, respectively, but the present invention is not limited thereto.

In addition, like the first learning area, the second learning area may also be configured for learning to mark the tone strength of "strong" in the segmentation area having the marked stress among the individual segmentation areas of the English word before writing the above Korean pronunciation notation, and mark the tone strength of "weak" in the segmentation area located before or after the segmentation area having the marked tone strength of "strong" and including the English vowel.

In one example, the second learning area may be configured for learning to mark a stress on "a", "o" and "e" that are preceding vowels of double vowels included in the English words "s/tay", "g/row" and "a/g/ree" partitioned into individual segmentation areas by at least one of the first slash and the second slash, and then mark the tone strength of "strong" at the top of the segmentation area having the marked stress, and mark the tone strength of "weak" at the top of the segmentation area, including the English vowels, as a segmentation area before and/or after the segmentation area having the marked tone strength of "strong", so that the English word notation part is organized in the same form as in FIG. 8 as a whole, but the present invention is not limited thereto.

In addition, the second learning area may be configured for learning to write the stress providing notation (see FIG. 8) from the rear vowel of the double vowels to the front vowel of the double vowels, before marking the tone strength of "strong" in the segmentation area having the marked stress.

In addition, in the second learning area, like the first learning area, each English consonant or vowel of an English word in the English word notation part having the marked tone strength may be written in the Korean pronunciation notation part by using the corresponding Korean pronunciation notation written in the consonant sound Korean-English character table or long vowel or short vowel sound Korean-English character table. Specifically, as shown in FIG. 9, in the second learning area, "s" in the English word "s/tay" may be written in the Korean pronunciation notation part using " 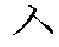 " corresponding to the "s" in the consonant sound Korean-English character table or " 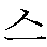 " formed by combining the " 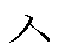 " with a vowel " 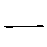 ", and "tay" in "s/tay" may be written in the Korean pronunciation notation part by using the Korean pronunciation notation " 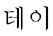 " formed by combining the " 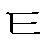 " corresponding to "t" in the consonant sound Korean-English character table with " 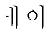 " corresponding to "ay" written in the double vowel sound Korean-English character table.

In addition, the second learning area may be configured for learning to write " 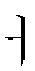 ", as a Korean pronunciation notation corresponding to the English vowel included in the segmentation area having the marked tone strength of "weak" among the segmentation areas of the English word in the English word notation part, in the Korean pronunciation notation part. Specifically, the second learning area may be configured for learning to write " 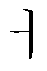 " in the Korean pronunciation notation part, as a Korean pronunciation notation corresponding to the English vowel included in the segmentation area other than the segmentation area located in an end of the English word among the segmentation areas having the marked tone strength of "weak".

In one example, as shown in FIG. 9, the second learning area may be configured for learning to, with respect to "a" in the English word "a/g/ree", write " 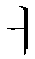 " or " 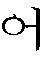 " in the Korean pronunciation notation part, and may be configured for learning to write " 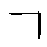 " or " 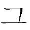 " with respect to "g" in the Korean pronunciation notation part. Meanwhile, the second learning area may be configured for learning that, since "r" in the English word "a/g/ree" is a Korean pronounce notation-difficult consonant, "r" may be combined with Korean pronunciation notation of "ee" at the rear thereof and written in the Korean pronunciation notation part by using one Korean pronunciation notation.

Specifically, the second learning area may be configured for learning to, with respect to "ree" in the English word "a/g/ree", write Korean pronunciation notation " 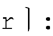 ", which is formed by combining the Korean pronounce notation-difficult consonant "r" with " 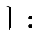 " corresponding to the "ee" and written in the double vowel sound Korean-English character table, in the Korean pronunciation notation part.

Likewise, the second learning area may be configured for learning to, with respect to the English word "g/row", write the Korean pronunciation notation " 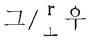 " in the Korean pronunciation notation part by using the same learning scheme as the above English word "a/g/ree".

The third learning area is configured for learning to mark a stress at the top of an English vowel in a segmentation area located in front of a segmentation area disposed therein with "tion", "sion" or "cian" in an English word serving as an English word in the English word notation part and including the "tion", "sion" or "cian", and write a long vowel Korean pronunciation notation or short vowel Korean pronunciation notation corresponding to the English vowel having the marked stress in the Korean pronunciation notation part.

Specifically, the third learning area is configured for learning stress notation rules, Korean pronunciation notation rules, tone strength notation rules, and the like for the English word including "tion", "sion" or "cian".

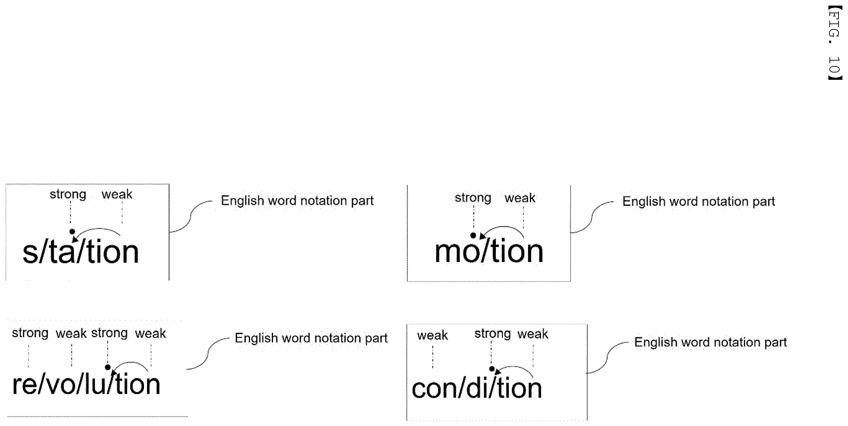

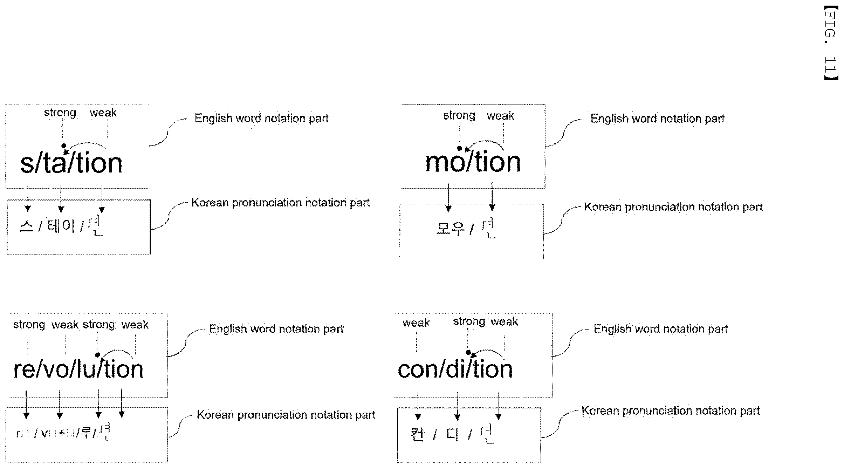

FIGS. 10 and 11 show English words for explaining the stress, tone strength, and Korean pronunciation notation of the English word written in the English word notation part of the third learning area according to the present invention.

In a specific example, as shown in FIG. 10, the third learning area may be configured for learning the stress notation rules, the Korean pronunciation rules, and the tone strength notation rules of English words including "tion", "sion" or "cian" at the end of the words such as "station", "revolution", "motion" and "condition".

More specifically, with respect to English words partitioned into individual segmentation areas by at least one of the first slash and the second slash as learned by the segmentation rule learning area, and "s/ta/tion", "mo/tion", "re/vo/lu/tion" and "con/di/tion" including "tion" at the end, the third learning area may be configured for learning to mark a stress at the top of English vowels "a", "o", "u" and "i" in a segmentation area before the segmentation area in which the "tion" is located.

Then, the third learning area is configured for learning to write a long vowel Korean pronunciation notation or short vowel Korean pronunciation notation corresponding to the English vowel "a", "o", "u" and "i" having the marked stress in the Korean pronunciation notation part. Specifically, the third learning area is configured for learning to write a long vowel Korean pronunciation notation written in a long vowel sound Korean-English character table in the Korean pronunciation notation part, in which the long vowel sound Korean-English character table includes a first-a area including English vowels "a", "e", "i", "o" and "u" as a long vowel Korean pronunciation notation corresponding to the English vowel having the marked stress; and a first-b area including " 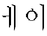 ", " 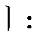 ", " 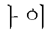 ", " 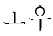 ", and " 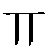 or 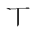 " as a long vowel Korean pronunciation notation corresponding to the English vowels, respectively, and may be configured for learning to write a short vowel Korean pronunciation notation written in a short vowel Korean-English character table in the Korean pronunciation notation part, in which the short vowel Korean-English character table includes a third-a area including English vowels "a", "e", "i", "o" and "u" as a short vowel Korean pronunciation notation corresponding to the English vowel having the marked stress; and a third-b area including " 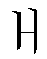 ", " 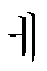 ", " 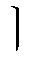 ", " 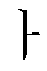 ", 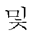 " 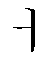 " as a short vowel Korean pronunciation notation corresponding to the English vowels, respectively.

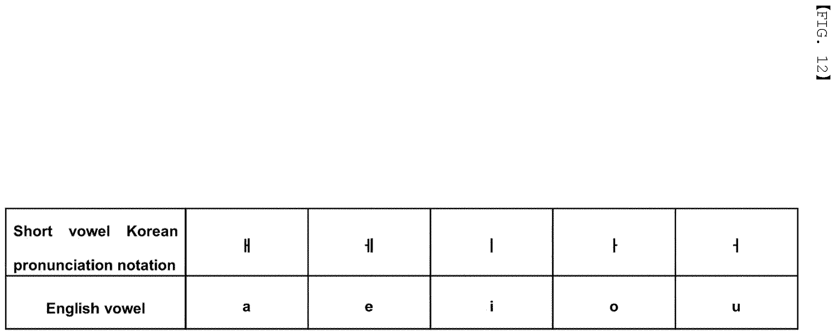

The long vowel sound Korean-English character table may be used as shown, for example, in FIG. 3, and the short vowel sound Korean-English character table may be used as shown, for example, in FIG. 12. However, the present invention is not limited thereto. As shown in FIG. 12, the short vowel sound Korean-English character table may have a structure in which English vowels and vowel Korean pronunciation notations corresponding to the English vowels are written together to be located at upper and lower sections, respectively, but the present invention is not limited thereto.

Like the first and second learning areas, the third learning area may be configured for learning to mark the tone strength of "strong" at the top of the segmentation area in which the stress is marked among the individual segmentation areas of the English word, and mark the tone strength of "weak" at the top of the segmentation area located before and/or after the segmentation area having the marked tone strength of "strong" and including the English vowel.

More specifically, the third learning area may be configured for learning to mark a stress at the top of "a", "o", "u" and "i" included in the English words "s/ta/tion", "mo/tion", "re/vo/lu/tion" and "con/di/tion" and then mark the tone strength of "strong" at the top of the segmentation area having the marked stress, and mark the tone strength of "weak" at the top of the segmentation area, including the English vowels, as a segmentation area before and after the segmentation area having the marked tone strength of "strong", so that the English word notation part is organized in the same form as in FIGS. 10 and 11 as a whole, but the present invention is not limited thereto.

In addition, the third learning area may be configured for learning to write the stress providing notation (see FIG. 10) from "tion" in the English word to the English vowel having the marked the stress before marking the tone strength of "strong" in the segmentation area having the marked stress.

In addition, like the first and second learning areas, the third learning area may be configured for learning to write each English consonant or vowel of an English word in the English word notation part having the marked tone strength in the Korean pronunciation notation part by using the corresponding Korean pronunciation notation written in the consonant sound Korean-English character table or long vowel sound Korean-English character table.

Specifically, as shown in FIG. 11, the third learning area may be configured for learning to write "s" in the English word "s/ta/tion" in the Korean pronunciation notation part by using " 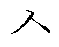 " corresponding to the "s" in the consonant sound Korean-English character table or " 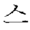 " formed by combining the " 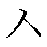 " with a vowel " 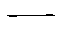 ", and may be configured for learning to write "ta" in "s/ta/tion" in the Korean pronunciation notation part by using the Korean pronunciation notation " 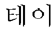 " formed by combining the " 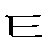 " corresponding to "t" in the consonant sound Korean-English character table with " 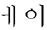 " corresponding to "a" written in the long vowel sound Korean-English character table.

Meanwhile, the third learning area may be configured for learning to write the English-Korean mixed pronunciation notation corresponding to "tion", "sion" or "cian" in the Korean pronunciation notation part.

Accordingly, when the English word in the English word notation part of the third learning area is "s/ta/tion", " 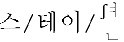 " may be written in the Korean pronunciation notation part corresponding to the English word "s/ta/tion" as shown in FIG. 10.

Likewise, the third learning area may be configured for learning to, with respect to "mo" in the English word "mo/tion" in the English word notation part, write the Korean pronunciation notation " 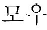 ", which is formed by combining the " 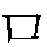 " corresponding to "m" in the consonant sound Korean-English character table with " 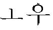 " corresponding to "o" written in the long vowel sound Korean-English character table, in the Korean pronunciation notation part, may be configured for learning to write an English-Korean mixed pronunciation notation " 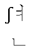 " corresponding to "tion" in the English word "mo/tion", in the Korean pronunciation notation part, and may be configured for learning to write " 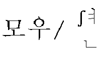 " as a whole in the Korean pronunciation notation part with respect to the English word "mo/tion".

In addition, when a vowel is included in the segmentation area having the marked tone strength of "weak" among the segmentation areas of the English word in the English word notation part, the third learning area may be configured for learning to write the Korean pronunciation notation " 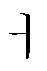 " corresponding to the vowel in the Korean pronunciation notation part, and may be configured for learning to, when the English word in the English word notation part contains any one Korean coda notation English consonant selected from the group consisting of "n", "m" and "l", combine the corresponding English consonant with the Korean pronunciation notation of the preceding segmentation area and write the combination in the Korean pronunciation notation part.

Specifically, the learning process of Korean pronunciation notation for the English word "re/vo/lu/tion" will be described. The third learning area may be configured for learning to write an English-Korean mixed pronunciation notation " 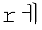 ", which is formed by combining the Korean pronounce notation-difficult consonant "r" with " 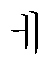 " corresponding to "e" written in the short vowel sound Korean-English character table, in the Korean pronunciation notation part as a Korean pronunciation notation corresponding to "re" of the segmentation area having the marked tone strength of "strong", write a Korean mixed pronunciation notation " 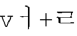 ", which is formed by combining " 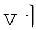 " , as a Korean pronunciation notation corresponding to "vo" of the segmentation area having the marked tone strength of "weak", formed by combining a Korean pronounce notation-difficult consonant "v" with a Korean pronunciation notation " 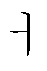 " corresponding to "o" with a consonant Korean pronunciation notation " 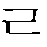 " corresponding to "l" included in "lu" of a rear segmentation area, in the Korean pronunciation notation part, write a Korean pronunciation notation " 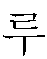 ", which is formed by combining a Korean pronunciation notation " 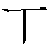 " corresponding to a vowel "u" written in the long vowel sound Korean-English character table with a Korean pronunciation notation " 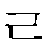 " corresponding to "l" written in the consonant sound Korean-English character table, in the Korean pronunciation notation part as a Korean pronunciation notation corresponding to "lu", and finally, write an English-Korean mixed pronunciation notation " 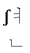 " corresponding to "tion" in the Korean pronunciation notation part, thereby writing " 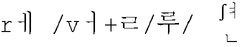 " as a whole in the Korean pronunciation notation part with respect to the English word "re/vo/lu/tion".

In addition, according to English words, the third learning area may be configured for learning to write a Korean pronunciation notation corresponding to the vowel and written in the short vowel sound Korean-English character table, with respect to a vowel in a segmentation area located in the segmentation area before "tion" and having the marked tone strength of "strong".

Specifically, the learning process of Korean pronunciation notation for the English word "con/di/tion" will be described. The third learning area may be configured for learning to write " 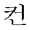 " in the Korean pronunciation notation part with reference to a consonant sound Korean-English keyboard and a Korean pronunciation notation " 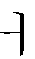 " corresponding to "o" with respect to the English word segmentation area "con" having the marked tone strength of "weak", write a Korean pronunciation notation " 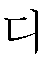 " formed by combining a Korean pronunciation notation " 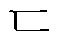 " corresponding to "d" with a Korean pronunciation notation " 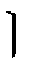 " corresponding to "i" written in the short vowel sound Korean-English character table with respect to a segmentation area "di" located before a segmentation area in which "tion" is located to include "i" having a stress marked at the top and have the tone strength of "strong", and finally, write an English-Korean mixed pronunciation notation " 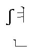 " corresponding to "tion" in the Korean pronunciation notation part, thereby writing " 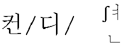 " as a whole in the Korean pronunciation notation part with respect to the English word "con/di/tion".

The fourth learning area is configured for learning to mark a stress at the top of an English vowel included in a segmentation area disposed therein with an English spelling group among individual segmentation areas of an English word serving as an English word in the English word notation part and including the English spelling group formed by individually combining "c", "g" or "s" with "e", "i" or "y", and write a long vowel Korean pronunciation notation or short vowel Korean pronunciation notation corresponding to the English vowel having the marked stress in the Korean pronunciation notation part.

Specifically, the fourth learning area is configured for learning stress notation rules, Korean pronunciation notation rules, tone strength notation rules, and the like for the English word including the English spelling group "ce", "ci", "cy", "ge", "gi", "gy", "se", "si" or "sy" formed by individually combining "c", "g" or "s" with "e", "i" or "y" in the English word.

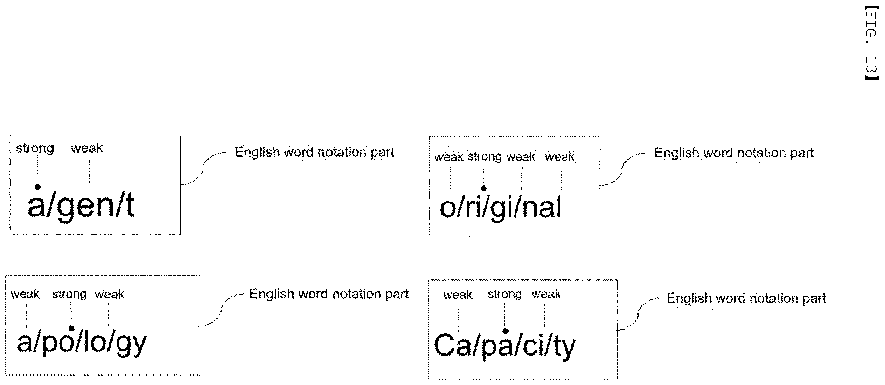

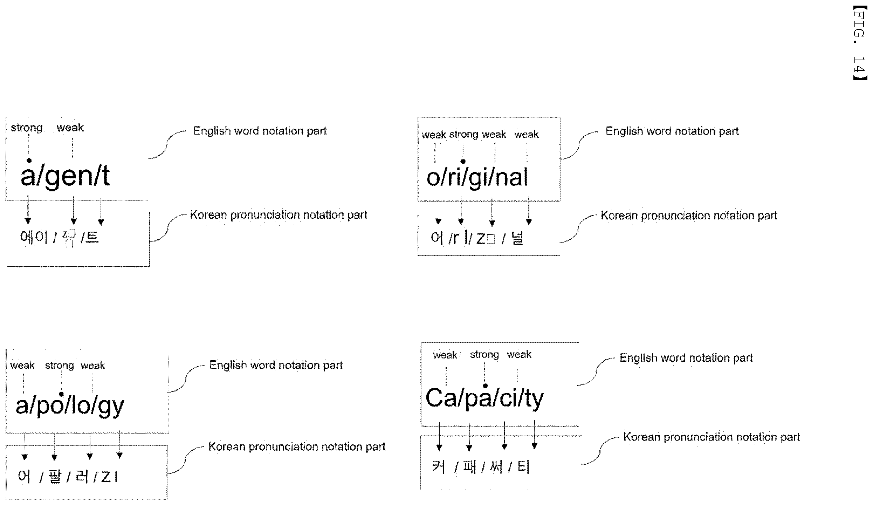

FIGS. 13 and 14 show English words for explaining the stress, tone strength, and Korean pronunciation notation of the English word written in the English word notation part of the fourth learning area according to the present invention.

In a specific example, as shown in FIG. 13, the fourth learning area is configured for learning the stress notation rules, the Korean pronunciation rules, and the tone strength notation rules of an English word including an English spelling group "ce", "ci", "cy", "ge", "gi", "gy", "se", "si" or "sy" in "agent", "original", "apology", "capacity" or the like.

More specifically, the fourth learning area may be configured for learning to, with respect to English words "a/gen/t", "o/ri/gi/nal", "a/po/lo/gy" and "ca/pa/ci/ty" partitioned into individual segmentation areas by at least one of the first slash and the second slash as learned by the segmentation rule learning area, and including English vowel "e" at the end, mark a stress on "a", "i", "o" and "a" in "a", "ri", "po" and "pa" that are segmentation areas except for segmentation areas including "ge", "gi", "gy" and "ci", respectively.

Then, the fourth learning area is configured for learning to write a long vowel Korean pronunciation notation or short vowel Korean pronunciation notation corresponding to the English vowel having the marked stress in the Korean pronunciation notation part. Specifically, the fourth learning area may be configured for learning to write a long vowel Korean pronunciation notation written in a long vowel sound Korean-English character table in the Korean pronunciation notation part, in which the long vowel sound Korean-English character table include a first-a area including English vowels "a", "e", "i", "o" and "u" as a long vowel Korean pronunciation notation corresponding to the English vowel having the marked stress; and a first-b area including " 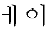 ", " 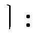 ", " 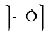 ", " 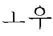 ", and " 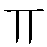 or 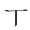 " as a long vowel Korean pronunciation notation corresponding to the English vowels, respectively, and may be configured for learning to write a short vowel Korean pronunciation notation written in a short vowel Korean-English character table in the Korean pronunciation notation part, in which the short vowel Korean-English character table includes a third-a area including English vowels "a", "e", "i", "o" and "u" as a short vowel Korean pronunciation notation corresponding to the English vowel having the marked stress; and a third-b area including " 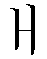 ", " 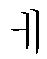 ", " 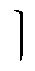 ", " 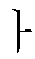 ", and " 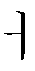 " as a short vowel Korean pronunciation notation corresponding to the English vowels, respectively.

Like the first to third learning areas, the fourth learning area may be configured for learning to mark the tone strength of "strong" in the segmentation area in which the stress is marked among the individual segmentation areas of the English word before the Korean pronunciation notations written in the consonant sound Korean-English character table and corresponding to the consonants in the English word are written in the Korean pronunciation notation part, and mark the tone strength of "weak" at the top of the segmentation area located before and/or after the segmentation area having the marked tone strength of "strong" and including the English vowel.

In one example, the fourth learning area may be configured for learning to mark a stress at the top of "a", "i", "o" and "i" included in the English words "a/gen/t", "o/ri/gi/nal", "a/po/lo/gy" and "ca/pa/ci/ty" and then mark the tone strength of "strong" at the top of the segmentation area having the marked stress, and mark the tone strength of "weak" at the top of the segmentation area, including the English vowels, as a segmentation area before and after the segmentation area having the marked tone strength of "strong", so that the English word notation part is organized in the same form as in FIGS. 10 and 11 as a whole, but the present invention is not limited thereto.

In addition, like the first to third learning areas the fourth learning area may be configured for learning to write each English consonant or vowel of an English word in the English word notation part having the marked tone strength in the Korean pronunciation notation part by using the corresponding Korean pronunciation notation written in the consonant sound Korean-English character table or long vowel sound Korean-English character table. In particular, the fourth learning area may be configured for learning to write any one Korean pronunciation notation selected from the group consisting of " 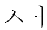 ", " 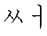 ", " 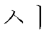 ", " 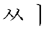 ", " 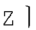 ", and " 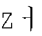 " as a Korean pronunciation notation corresponding to an English spelling formed by individually combining "c", "g" or "s" with "e", "i" or "y" in the Korean pronunciation notation part.

Specifically, as shown in FIG. 14, the fourth learning area may be configured for learning to write " 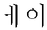 " or " 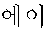 " corresponding to the "a" in the long vowel sound Korean-English character table, with respect to "a" in the English word "a/gen/t", may be configured for learning to write " 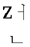 ", which is formed by combining a Korean pronunciation notation " 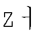 " corresponding to "ge" with a Korean pronunciation notation " 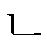 " corresponding to "n", in the Korean pronunciation notation part with respect to "gen" in "a/gen/t", and may be configured for learning to write a Korean pronunciation notation " 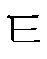 " or " 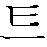 " corresponding to the "t" in the Korean pronunciation notation part with respect to "t" in "a/gen/t".

In addition, the fourth learning area may be configured for learning to write " 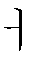 ", as a Korean pronunciation notation corresponding to the vowel of the segmentation area having the marked tone strength of "weak" among the segmentation areas of the English word in the English word notation part, in the Korean pronunciation notation part. Specifically, the fourth learning area may be configured for learning to write a Korean pronunciation notation " 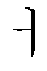 ", which corresponds to a vowel of a segmentation area which is not located at the end of the English word among segmentation areas having the marked tone strength of "weak", in the Korean pronunciation notation part.

In a specific example, the fourth learning area may be configured for learning to write a Korean pronunciation notation " 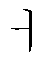 " or " 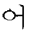 " corresponding to the "o" in the Korean pronunciation notation part with respect to "o" in the English word "o/ri/gi/nal" in the English word notation part, may be configured for learning to, with respect to "ri" in "o/ri/gi/nal", write a Korean pronunciation notation " 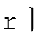 ", which is formed by combining the Korean pronounce notation-difficult consonant "r" with " 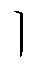 " corresponding to the "i" written in the short vowel sound Korean-English character table, in the Korean pronunciation notation part, may be configured for learning to, with respect to "gi" in "o/ri/gi/nal", write a Korean pronunciation notation " 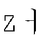 " corresponding to the "gi" in the Korean pronunciation notation part, and may be configured for learning to, with respect to "nal" in "o/ri/gi/nal", write a Korean pronunciation notation " 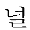 ", which is formed by combining a Korean pronunciation notation " 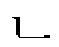 " corresponding to "n", a Korean pronunciation notation " 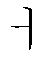 " corresponding to "a" and a Korean pronunciation notation " 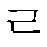 " corresponding to "l", in the Korean pronunciation notation part.

In addition, when any one Korean coda notation English consonant selected from the group consisting of "n", "m" and "l" is included, the fourth learning area may be configured for learning to combine the corresponding English consonant with the Korean pronunciation notation of the preceding segmentation area and write the combination in the Korean pronunciation notation part.

Accordingly, the English word "a/po/lo/gy" in the fourth learning area may be written in the Korean pronunciation notation part in the same form as " 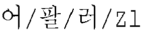 " based on the Korean pronunciation notation learning rules, the English word "ca/pa/ci/ty" may be written in the Korean pronunciation notation part in the form of " 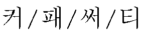 " based on the Korean pronunciation notation learning rules, and the fourth learning area may be configured for learning to write the Korean pronunciation notation corresponding to each word in the Korean pronunciation notation part.

Accordingly, after learning the segmentation rules in the segmentation rule learning areas, and then learning the step-by-step process for learning the stress notation rules, the Korean pronunciation notation rules, and the tone strength notation rules through the first to fourth learning areas, even beginners can pronounce English words similarly to native speakers without much difficulty.

In particular, the English study material according to the present invention can be very effective in learning vowel-centered Korean pronunciation notations of English words, through learning the rules on vowel stress notation and the rules on marking the tone strength only at the top of the segmentation area containing the vowel.

In addition, the English study material according to the present invention may further include: a fifth learning area for learning to mark a stress at the top of an English vowel included in a segmentation area in which a prefix or suffix is not located among individual segmentation areas of an English word serving as an English word in the English word notation part and including the prefix or suffix, and write a long vowel Korean pronunciation notation or short vowel Korean pronunciation notation corresponding to the English vowel having the marked stress in the Korean pronunciation notation part.

The fifth learning area may be configured for learning the stress notation rules, the Korean pronunciation notation rules, and the tone strength notation rules in the same way as in the first to fourth learning areas, and may be configured for further learning to, when the English word contains a prefix or suffix, mark the tone strength of "weak " in the segmentation area in which a prefix or suffix is located, and write Korean pronunciation notations corresponding to English consonants and vowels in the segmentation area in which the prefix or suffix is located.

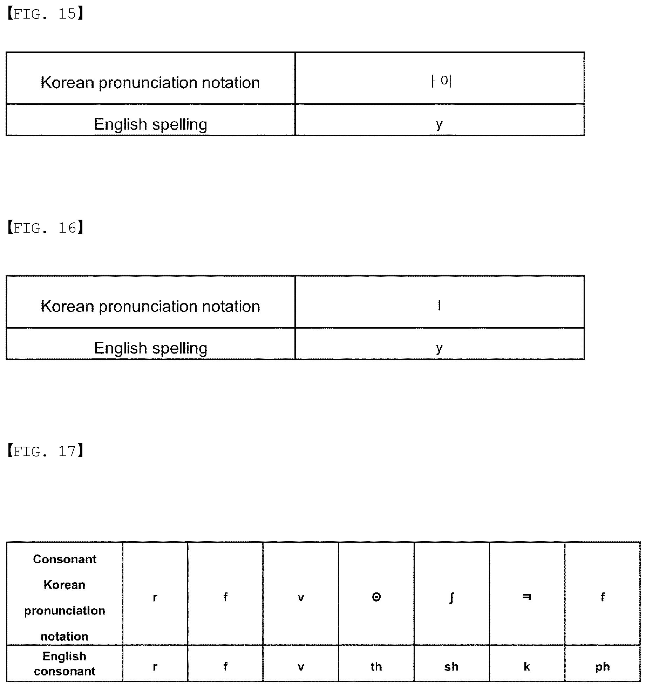

In addition, the English study material according to the present invention may further include a long vowel sound Korean-English character table (FIG. 15) and a short vowel sound Korean-English character table (FIG. 16) with respect to the English spelling "y", and may further include a Korean-English character table with respect to Korean pronounce notation-difficult consonants (FIG. 17). Further, it may include, without limitation, a Korean-English character table designed to write Korean pronunciation notations corresponding to consonants in an English word.

In addition, the present invention relates to an English study method using the English study material.

The English study method includes: learning to convert the Korean notations of the proper nouns into the English notations, in a proper noun English notation learning area including a Korean-Romanization pronunciation symbol keyboard part for converting Korean notations of proper nouns including names, addresses, region names, and country names into English notations; segmenting a first consonant and a second consonant other than a single pronunciation consonant among spellings of an English word in an English word notation part by using a first slash, segmenting a rear of a vowel unit including at least one vowel among middle spellings of the English word by using a second slash, or partitioning the English word into individual segmentation areas by using the first slash and the second slash; a first learning step of learning to mark a stress at the top of an English vowel of an English word serving as an English word partitioned into individual segmentation areas, including English vowel "e" and including the English vowel located in a segmentation area adjacent to a segmentation area in which the English vowel "e" is located, and write a long vowel Korean pronunciation notation corresponding to the English vowel having the marked stress in the Korean pronunciation notation part; a second learning step of learning to mark a stress at the top of a prior vowel among double vowels of an English word serving as an English word partitioned into individual segmentation areas and including the double vowels, and write a double vowel Korean pronunciation notation corresponding to the double vowel in the Korean pronunciation notation part; a third learning step of learning to mark a stress at the top of an English vowel in a segmentation area located in front of a segmentation area disposed therein with "tion", "sion" or "cian" in an English word serving as an English word partitioned into individual segmentation areas and including the "tion", "sion" or "cian", and write a long vowel Korean pronunciation notation or short vowel Korean pronunciation notation corresponding to the English vowel having the marked stress in the Korean pronunciation notation part; and a fourth learning step of learning to mark a stress at the top of an English vowel included in a segmentation area disposed therein with an English spelling group among individual segmentation areas of an English word serving as an English word partitioned into individual segmentation areas and including the English spelling group formed by individually combining "c", "g" or "s" with "e", "i" or "y", and write a long vowel Korean pronunciation notation or short vowel Korean pronunciation notation corresponding to the English vowel having the marked stress in the Korean pronunciation notation part.

Each step of the English learning method is performed in each learning area in the English learning material. When a beginner goes through the above steps, the beginner can pronounce English words like native speakers.

The step of learning to convert the Korean notations of the proper nouns into English notations may be performed in the proper noun English notation learning area.

The step of partitioning the English word into individual segmentation areas may be performed in the segmentation rule learning area in the English learning material, and specifically, may include learning the segmentation rule of an English word using any one or more of the first slash and the second slash mentioned in the segmentation rule learning area above.

The second to fourth learning steps may be performed in the second to fourth learning areas in the English learning material, respectively, in which the stress rule, the tone strength notation rule, and the Korean pronunciation notation rule may be learned in the second to fourth learning areas.

In one example, the first to fourth learning steps may individually include notating a tone strength of "strong" or "weak" at the top of a segmentation area including an English vowel among the individual segmentation areas of the English word in the English word notation part.

In another example, the first to fourth learning steps may individually include writing " 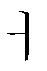 ", as a Korean pronunciation notation corresponding to the English vowel included in the segmentation area having the marked tone strength of "weak", in the Korean pronunciation notation part.

In another example, the first to fourth learning steps may include marking the tone strength of "strong" at the top of the area including the English spellings "ar" when any one area includes the English spellings "ar" among the individual segmental areas of the English word in the English word notation part, and marking the tone strength of "weak" at the top of the area including the English spellings "er", "ir", "or" or "ur" when any one area includes the English spellings "er", "ir", "or" or "ur" among the individual segmental areas of the English word in the English word notation part.

In addition, the English study method may further include steps of learning to mark a stress at the top of an English vowel included in a segmentation area in which a prefix or suffix is not located among individual segmentation areas of an English word including the prefix or suffix serving as an English word partitioned into individual segmentation areas through the fifth learning area of the English learning material, and to write a long vowel Korean pronunciation notation or short vowel Korean pronunciation notation corresponding to the English vowel having the marked stress in the Korean pronunciation notation part.

In one example, the English study method may further include a fifth learning step of learning to mark a stress at the top of an English vowel included in a segmentation area in which a prefix or suffix is not located among individual segmentation areas of an English word including the prefix or suffix as an English word partitioned into individual segmentation areas, and to write a long vowel Korean pronunciation notation or short vowel Korean pronunciation notation corresponding to the English vowel having the marked stress in the Korean pronunciation notation part.

According to the English learning material and method as described above, even beginners can easily see the Korean pronunciation notation to use pronunciation similar to native speakers, and take the stress and tone strength into consideration together during pronouncing, thereby facilitating the beginners to use a more native English pronunciation.

As described above, although the present disclose has been described by the limited embodiments and drawings, the present disclosure is not limited to the above embodiments, and it will be understood by those skilled in the art that various changes and modifications are available from the above-mentioned description. Therefore, the scope of the present disclosure will not be limited to the aforementioned embodiments, and will be determined by the following claims and the equivalents thereof.

## Claims

1. An English study material comprising:
an English word notation part composed of a plurality of spellings;
a Korean pronunciation notation part including a Korean pronunciation notation corresponding to an individual segmentation area of an English word within the English word notation part;
a proper noun English notation learning area including a Korean-Romanization pronunciation symbol keyboard part for converting Korean notations of proper nouns including names, addresses, region names, and country names into English notations;
a segmentation rule learning area for learning segmentation rules of the English word by using at least one of a first slash for partitioning the English word into individual segmentation areas by segmenting first and second consonants except for a single pronunciation consonant among spellings of the English word in the English word notation part, and a second slash for partitioning the English word into individual segmentation areas by segmenting a rear of a vowel unit including at least one vowel among middle spellings of the English word;
a first learning area for learning to notate a stress at a top of an English vowel of an English word serving as an English word in the English word notation part, including English vowel "e" and including an English vowel located in a segmentation area adjacent to a segmentation area in which the English vowel "e" is located, and write a long vowel Korean pronunciation notation corresponding to the English vowel having the notated stress in the Korean pronunciation notation part;
a second learning area for learning to notate a stress at a top of a prior vowel among double vowels of an English word serving as an English word in the English word notation part and including the double vowels, and write a double vowel Korean pronunciation notation corresponding to the double vowel in the Korean pronunciation notation part;
a third learning area for learning to notate a stress at a top of an English vowel in a segmentation area located in front of a segmentation area disposed therein with "tion", "sion" or "cian" in an English word serving as an English word in the English word notation part and including the "tion", "sion" or "cian", and write a long vowel Korean pronunciation notation or short vowel Korean pronunciation notation corresponding to the English vowel having the notated stress in the Korean pronunciation notation part; and
a fourth learning area for learning to notate a stress at a top of an English vowel included in a segmentation area disposed therein with an English spelling group among individual segmentation areas of an English word serving as an English word in the English word notation part and including an English spelling group formed by individually combining "c", "g" or "s" with "e", "i" or "y", and write a long vowel Korean pronunciation notation or short vowel Korean pronunciation notation corresponding to the English vowel having the notated stress in the Korean pronunciation notation part.

2. The English study material of claim 1, wherein the vowel unit segmented by the second slash of the segmentation rule learning area includes at least one selected from:
a single vowel;
a double vowel;
a front vowel of the double vowel;
a vowel group including the single vowel or the double vowel and any single pronunciation consonant selected from the group consisting of "th", "sh", "ch", and "ph" disposed in front of the single or double vowel;
a first li-eul ( 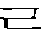 ) pronunciation group including a single vowel and an English spelling "r" disposed at rear of the single vowel; and
a second li-eul ( 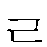 ) pronunciation group including a single vowel and English spellings "re" disposed at rear of the single vowel.

3. The English study material of claim 1, wherein the first to fourth learning areas are configured for learning to notate a tone strength of "strong" or "weak" at a top of a segmentation area including an English vowel among the individual segmentation areas of the English word in the English word notation part.

4. The English study material of claim 3, wherein the first to fourth learning areas are configured for learning to write " 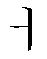 ", as a Korean pronunciation notation corresponding to the English vowel included in the segmentation area in which the tone strength of "weak" is notated, in the Korean pronunciation notation part.

5. The English study material of claim 1, wherein, when the individual segmentation area of the English word is any one spelling of "p", "t", "k", "c", "b", "d", and "g", and a Korean pronunciation notation corresponding to the English spelling includes an English spelling which is a single Korean consonant pronunciation notation, the first to fourth learning areas are configured for learning to combine the single Korean consonant pronunciation notation corresponding to the English spelling with a Korean pronunciation notation of a segmentation area prior to the segmentation area including the Korean pronunciation of the single Korean consonant pronunciation notation, so as to write the combined notations in the Korean pronunciation notation part.

6. The English study material of claim 1, wherein the first to fourth learning areas are configured for learning to combine a Korean pronunciation notation corresponding to the Korean coda notation English consonant, in an English word serving as an English word in the English word notation part and including any one Korean coda notation English consonant selected from the group consisting of "n", "m" and "1", with a Korean pronunciation notation of a segmentation area prior to a segmentation area disposed therein with Korean coda notation English consonant, so as to write the combined notations in the Korean pronunciation notation part.

7. The English study material of claim 1, wherein the first learning area is configured for learning to write a long vowel Korean pronunciation notation written in a long vowel Korean-English character table in the Korean pronunciation notation part, in which the long vowel Korean-English character table includes a first-a area including English vowels "a", "e", "i", "o" and "u" as a long vowel Korean pronunciation notation corresponding to the English vowel having the notated stress; and a first-b area including " 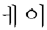 ", " 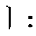 ", " 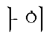 ", " 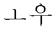 ", and " 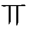 or 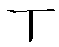 " as a long vowel Korean pronunciation notation corresponding to the English vowels, respectively.

8. The English study material of claim 1, wherein the second learning area is configured for learning to write a double vowel Korean pronunciation notation written in a double vowel Korean-English character table in the Korean pronunciation notation part, in which the double vowel Korean-English character table includes a second-a area including, as a double vowel Korean pronunciation notation corresponding to the double vowel, double vowels "ai", "ay", "ey", "ea", "ee", "ei", "ie", "oa", "ow", "ue" and "ui"; and a second-b area including double vowel Korean pronunciation notation " 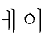 " corresponding to the double vowels "ai", "ay" and "ey",
double vowel Korean pronunciation notation " 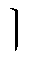 :" corresponding to the double vowels "ea", "ee" and "ei", double vowel Korean pronunciation notation " 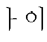 " corresponding to the double vowel "ie", double vowel Korean pronunciation notation " 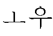 " corresponding to the double vowels "oa" and "ow", and double vowel Korean pronunciation notation " 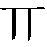 " corresponding to the double vowel "ue" and "ui".

9. The English study material of claim 1, wherein the third first learning area is configured for learning to write a long vowel Korean pronunciation notation written in a long vowel Korean-English character table in the Korean pronunciation notation part, in which the long vowel Korean-English character table includes a first-a area including English vowels "a", "e", "i", "o" and "u" as a long vowel Korean pronunciation notation corresponding to the English vowel having the notated stress; and a first-b area including " 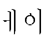 ", " 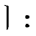 ", " 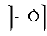 ", " 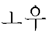 ", and " 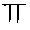 or 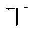 " as a long vowel Korean pronunciation notation corresponding to the English vowels, respectively, and the third first learning area is configured for learning to write a short vowel Korean pronunciation notation written in a short vowel Korean-English character table in the Korean pronunciation notation part, in which the short vowel Korean-English character table includes a third-a area including English vowels "a", "e", "i", "o" and "u" as a short vowel Korean pronunciation notation corresponding to the English vowel having the notated stress; and a third-b area including " 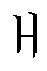 ", " 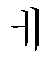 ", " 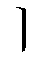 ", " 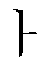 ", 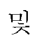 " 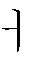 " as a short vowel Korean pronunciation notation corresponding to the English vowels, respectively.

10. The English study material of claim 1, wherein the third first learning area is configured for learning to write an English-Korean mixed pronunciation notation, which corresponds to "tion", "sion" or "cian" included in the English word in the English word notation part, in the Korean pronunciation notation part.

11. The English study material of claim 1, wherein the fourth learning area is configured for learning to write any one Korean pronunciation notation selected from the group consisting of " 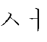 ", " 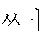 ", " 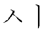 ", " 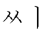 ", " 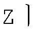 ", and " 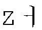 " as a Korean pronunciation notation corresponding to an English spelling formed by individually combining "c", "g" or "s" with "e", "i" or "y", in the Korean pronunciation notation part.

12. The English study material of claim 1, further comprising:
a fifth learning area for learning to notate a stress at a top of an English vowel included in a segmentation area in which a prefix or suffix is not located among individual segmentation areas of an English word serving as an English word in the English word notation part and including the prefix or suffix, and write a long vowel Korean pronunciation notation or short vowel Korean pronunciation notation corresponding to the English vowel having the notated stress in the Korean pronunciation notation part.

13. An English study method in an English study method using an English study material according to any one of claims 1 to 12, the English study method comprising:
learning to convert the Korean notations of proper nouns into English notations, in a proper noun English notation learning area including a Korean-Romanization pronunciation symbol keyboard part for converting the Korean notations of proper nouns including names, addresses, region names, and country names into the English notations;
segmenting a first consonant and a second consonant other than a single pronunciation consonant among spellings of an English word in an English word notation part by using a first slash, segmenting a rear of a vowel unit including at least one vowel among middle spellings of the English word by using a second slash, or partitioning the English word into individual segmentation areas by using the first slash and the second slash;
a first learning step of learning to notate a stress at a top of an English vowel of an English word serving as an English word partitioned into individual segmentation areas, including English vowel "e" and including the English vowel located in a segmentation area adjacent to a segmentation area in which the English vowel "e" is located, and write a long vowel Korean pronunciation notation corresponding to the English vowel having the notated stress in the Korean pronunciation notation part;
a second learning step of learning to notate a stress at a top of a prior vowel among double vowels of an English word serving as an English word partitioned into individual segmentation areas and including the double vowels, and write a double vowel Korean pronunciation notation corresponding to the double vowel in the Korean pronunciation notation part;
a third learning step of learning to notate a stress at a top of an English vowel in a segmentation area located in front of a segmentation area disposed therein with "tion", "sion" or "cian" in an English word serving as an English word partitioned into individual segmentation areas and including the "tion", "sion" or "cian", and write a long vowel Korean pronunciation notation or short vowel Korean pronunciation notation corresponding to the English vowel having the notated stress in the Korean pronunciation notation part; and
a fourth learning step of learning, among individual segmentation areas of an English word serving as an English word partitioned into individual segmentation areas and including the English spelling group formed by individually combining "c", "g" or "s" with "e", "i" or "y" ,
to notate a stress at a top of an English vowel included in a segmentation area disposed therein with an English spelling group, and write a long vowel Korean pronunciation notation or short vowel Korean pronunciation notation corresponding to the English vowel having the notated stress in the Korean pronunciation notation part.

14. The English study method of claim 13, wherein the first to fourth learning steps individually include notating a tone strength of "strong" or "weak" at a top of a segmentation area including an English vowel among the individual segmentation areas of the English word in the English word notation part.

15. The English study method of claim 14, wherein the first to fourth learning steps individually include writing " 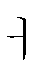 ", as a Korean pronunciation notation corresponding to the English vowel included in the segmentation area in which the tone strength of "weak" is notated, in the Korean pronunciation notation part.

16. The English study method of claim 13, further comprising:
a fifth learning step of learning to notate a stress at a top of an English vowel included in a segmentation area in which a prefix or suffix is not located among individual segmentation areas of an English word serving as an English word partitioned into individual segmentation areas and including the prefix or suffix, and write a long vowel Korean pronunciation notation or short vowel Korean pronunciation notation corresponding to the English vowel having the notated stress in the Korean pronunciation notation part.
